# EUROPÄISCHE PATENTSCHRIFT

(11) **EP 0 616 788 B1**
(45) Veröffentlichungstag und Bekanntmachung des Hinweises auf die Patenterteilung: **22.04.1998**
(21) Anmeldenummer: 94102111.5
(22) Anmeldetag: 11.02.1994
(51) Int. Cl.: A47L 9/24, F16L 37/12

(54) **Rohrverbindungsstück eines Staubsaugers**
Vacuum cleaner hose coupling
Raccord pour tuyau d'aspirateur

(30) Priorität: 24.03.1993 DE 4309495
(43) Veröffentlichungstag der Anmeldung: 28.09.1994
(73) Patentinhaber: AEG Hausgeräte GmbH, 90429 Nürnberg (DE)
(72) Erfinder: Wiske, Carola, Dipl.-Ing., D-90522 Oberasbach (DE); Schneider, Gottfried, D-90765 Fürth (DE)

(56) Entgegenhaltungen:
- EP-A- 0 558 930
- DE-A- 3 726 778
- DE-A- 4 201 855
- US-A- 2 184 881

## Beschreibung

Die Erfindung betrifft einen Staubsaugerschlauch gemäß dem Oberbegriff des ersten Anspruchs.

Bei einem bekannten Staubsaugerschlauch dieser Art (DE-A-37 26 778) ist ein flexibler, gewellter Saugschlauch mit einem Griffstück versehen, das ein einendig in den Saugschlauch eingeschobenes Innenrohr sowie eine äußere Hülse umfaßt, die einerseits den Außenmantel des Saugschlauchs umschließt und über dessen Ende zum freien Ende des Innenrohrs hin übersteht. In dem hierdurch gebildeten Raum ist ein zweiarmiger Hebel schwenkbar gelagert, der an einem Hebelarm eine im wesentlichen radial verstellbare Rastnase aufweist und dessen anderer Hebelarm durch einen Durchbruch der Hülse nach außen ragt und eine manuell bedienbare Handhabe bildet. Durch radialen Druck auf diesen Handhabungshebel wird die Rastnase gegen die Kraft einer Feder aus dem Eingriff mit einer Nut gebracht, die im Umfangsrand eines in einem Staubsaugergehäuse festgesetzten Rohrstutzens vorgesehen ist. In diesen Rohrstutzen greift das freie Ende des Griffstück-Innenrohrs ein, wenn der Staubsaugerschlauch an den Staubsauger angeschlossen und daran mittels der Rastnase gegen axiale Verschiebung geregelt ist. Bei diesem Aufbau besteht das Griffstück aus mehreren einzeln herzustellenden und zu montierenden Bauteilen.

Der Erfindung liegt die Aufgabe zugrunde, bei einem Staubsaugerschlauch gemäß dem Oberbegriff des ersten Anspruchs Maßnahmen zu treffen, durch welche ein vereinfachter Aufbau erreicht wird.

Die Lösung dieser Aufgabe erfolgt gemäß der Erfindung durch die Merkmale des ersten Anspruchs.

Bei einer Ausgestaltung eines Staubsaugerschlauchs gemäß der Erfindung sind die zur lösbaren Kupplung des Saugschlauchs mit einem Staubsauger erforderlichen Handhabungsteile zu einem einstückig herstellbaren Bauteil zusammengefaßt, das hinterschnittfrei in einem Spritzwerkzeug gefertigt werden kann. Dabei wird zumindest ein Teil des von Hand zu erfassenden Griffstücks zugleich als Träger der Rastnase und der zugehörigen Handhabe genutzt, wobei dieser Griffstückteil am übrigen Griffstück durch Ausnutzung der Materialelastizität schwenkbeweglich gehalten ist.

Vorzugsweise weist das Griffstück eine äußere Hülse auf, die das betreffende Ende des Saugschlauchs umgreift und an der ein im mittleren Bereich schwenkbeweglich gelagerter Zangenschenkel in die Umfangskontur gelegt ist. Der eine Zangenschenkelteil ist dabei als Handhabe zu benutzen, während der andere Zangenschenkelteil die Rastnase trägt. Dieser Zangenschenkelteil, dem diametral gegenüberliegend ein entsprechender Zangenschenkelteil gegenüberstehen kann, erstreckt sich insbesondere in Achsrichtung des Saugschlauchs. Dabei dient der dem Schlauch zugewandte Schenkelteil als Handhabe, die manuell radial zum Schlauch hin niedergedrückt werden kann, so daß sich der andere Schenkelteil mit der Rastnase von der Achse entfernt und so außer Eingriff mit einer Gegenraste an einem Staubsauger gebracht werden kann. In der statischen Ruhelage weist somit der als Handhabe ausgebildete Schenkelteil radialen Abstand vom Innenrohr bzw. dem darauf aufgeschobenen Saugschlauch auf. Der oder die beiden Zangenschenkel sind vorzugsweise nach Art von koaxial zum Innenrohr angeordneten Halbschalen ausgebildet, wobei die Halbschalen in Achsrichtung durch einen Spalt getrennt sind, der die radiale Verstellung des oder der Handhaben-Schenkelteile zuläßt. Dieser Spalt kann zwischen den als Handhabe ausgebildeten Schenkelteilen breiter als zwischen den die Rastnasen tragenden Schenkelteilen sein. Bei einer Ausbildung der äußeren Hülle des Griffteils als zwei diametral gegenüberliegende Halbschalen braucht dieser Griffteil nur am schlauchseitigen Ende von Hand erfaßt werden, so daß durch die Umgriffkraft diese Schenkelteile radial nach innen und damit die mit den Rastnasen versehenen Schenkelteile nach außen schwenken. Es erfolgt somit automatisch ein Lösen der Rastverbindung des Staubsaugerschlauchs vom Staubsauger bzw. das Öffnen der so gebildeten Zange beim Anstecken wie beim Abziehen des Staubsaugerschlauchs an den bzw. von dem Staubsauger. Diese Wirkung tritt auch ein, wenn nur eine Halbschale schwenkbeweglich ausgebildet und mit einer Rastnase versehen ist. Dann dient die andere Halbschale lediglich als Gegenlager für die manuell beim Umgriff aufgebrachte radiale Druckkraft. Die Anbindung des oder der Zangenschenkel an das mit dem Saugschlauch verbundene Innenrohr erfolgt über einen radial nach außen vom Innenrohr weglaufenden Scharniersteg, der durch seine Eigenelastizität für die Rückstellung des betreffenden Zangenschenkels sorgen kann. Dieser Scharniersteg weist insbesondere einen senkrecht auf der Außenmantelfläche des Innenrohs stehenden Stegabschnitt und einen daran anschließenden, parallel zur Innenrohrachse und zum Saugschlauch hin gerichteten Stegabschnitt auf, der schließlich im mittleren Bereich des betreffenden Zangenschenkels in denselben übergeht. Der Abstand zwischen dem Innenrohr und dem letztgenannten Stegteil ist dabei so gewählt, daß das Saugschlauchende in den betreffenden Raum eingeführt werden kann. Am Übergang dieses Stegabschnitts zum Zangenschenkel ist noch ein nach außen gerichteter Rand vorgesehen, durch den der Zangenschenkel den erforderlichen radialen Abstand vom Saugschlauch-Außenmantel gewinnt. Im übrigen ragt das Innenrohr axial über den mit dem Rasthaken versehenen Zangenschenkel hinaus, so daß es in einen angepaßten Einlaßstutzen eines Staubsaugers eingeführt werden kann und darin einen mechanisch stabilen Halt findet. Am äußeren Ende dieses Einlaßstutzens kann sich die Gegenraste in Form einer umlaufenden Nut befinden, in welche die Rastnase in der Betriebsstellung eingreift und die eine Drehung des Staubsaugerschlauchs um mehr als 360 Winkelgrade zuläßt.

Die Erfindung ist nachfolgend anhand der Zeichnungen eines Ausführungsbeispiels näher erläutert.

Ein lediglich angedeutetes Gerätegehäuse 1 eines Staubsaugers ist mit einem nach außen überstehenden Rohrstutzen 2 versehen, dessen Durchgangsöffnung in einen bei 3 angedeuteten Staubbeutelaufnahmeraum mündet. An den Rohrstutzen 2 ist ein Staubsaugerschlauch angesteckt, der einen flexiblen Saugschlauch 4, ein Griffstück 5,6 und ein mit letzterem einstückig verbundenen und umgebenen, in ein Ende des Saugschlauchs eingeführten Innenrohr 7 besteht. Das Innenrohr 7 steht axial über das Griffstück 5,6 hinaus und greift mit geringem Spiel in die Durchgangsöffnung des Rohrstutzens 2 ein. Der Rohrstutzen 2 weist an seinem freien Ende eine umlaufende Nut 8 im Umfangsrand auf, die radial nach außen geöffnet ist. Sie dient als Gegenraste für wenigstens eine, vorliegend zwei Rastnasen 9 am in der Betriebslage benachbarten axialen Ende des Griffstücks 5,6.

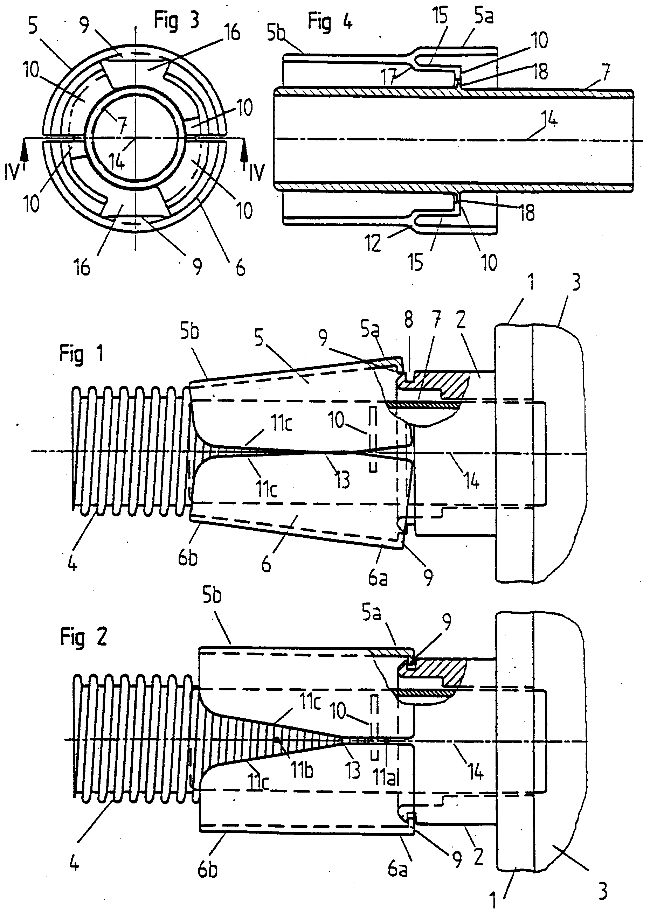

Die Rastnasen 9 sind einstückig mit jeweils einem Teil des Griffstücks 5,6 verbunden, wobei jeder dieser Griffstückteile 5,6 schwenkbeweglich und einstückig mit dem übrigen Griffstück, insbesondere dem Innenrohr 7 verbunden sind. Als gelenkige Verbindung zwischen den Griffstückteilen 5 bzw. 6 und dem Innenrohr 7 ist im mittleren Abschnitt der axialen Länge des Innenrohres 7 jeweils ein radial nach außen verlaufender Scharniersteg 10 vorgesehen, an den je einer der beweglichen Griffstückteile 5 bzw. 6 nach Art eines asymmetrisch angelenkten Zangenschenkels angesetzt ist. Die Griffstückteile 5,6 erstrecken sich somit in axialer Richtung beidseitig vom Scharniersteg 10 weg und tragen an dem dem Saugschlauch 4 abgewandten bzw. dem Rohrstutzen 2 zugewandten Schenkelteil 5a bzw. 6a die radial nach innen gerichtete Rastnase 9. Dagegen ist der zum Saugschlauch 4 gerichtete Schenkelteil 5b bzw. 6b als Handhabe in der statischen Ruhelage gemäß Fig. 2 mit radialem Abstand vom Innenrohr 7 und insbesondere vom Saugschlauch 4 angeordnet. Die als Griffstückteile 5 bzw. 6 dienenden Zangenschenkel sind diametral zueinander am Innenrohr angeordnet, wobei jeder Zangenschenkel nach Art einer koaxial zum Innenrohr 7 angeordneten, weniger als den halben Umfang umschließende Schale ausgebildet ist. Es sind somit zwischen den Zangenschenkeln bzw. Griffstückteilen 5,6 in axialer Richtung Spalte 11 vorgesehen, wobei der Spalt 11a zwischen den die Rastnasen 9 tragenden Schenkelteilen 5a bzw. 6a kleiner ist als der Spalt 11b zwischen den als Handhabe ausgebildeten Schenkelteilen 5b und 6b. Der den Rastnasen 9 näherliegende Spaltabschnitt 11a ist schmal und dient lediglich der Formtrennung. Er erstreckt sich zudem nur bis zur Verbindungsstelle des jeweiligen Griffstückteils 5,6 mit dem zugehörigen Scharniersteg 10. Der übrige Spaltabschnitt 11b erweitert sich zum Saugschlauch hin vorzugsweise spitzwinklig.

Ausgehend von der statischen Ruhelage gemäß Fig. 2, in welcher die nach Art von Zangenschenkeln ausgebildeten Griffstückteile 5,6 im wesentlichen parallel zum Innenrohr 7 verlaufen und bei an das Staubsaugergehäuse 1 angesteckten Innenrohr 7 in die Nut 8 eingreifenden Rastnasen 9 können die als Handhaben ausgebildeten Schenkelteile 5b,6b durch Umgreifen mit einer Hand radial aufeinander zu gedrückt werden. Der Spaltabschnitt 11b ist dabei so ausgebildet, daß die Spaltkanten 11c in diesem Bereich gemäß Fig.1 sich zumindest weitgehend nähern. Die Verbindungsstelle 12 des Scharnierstegs 10 mit den Griffstückteilen 5,6 am Übergang zwischen den Spaltabschnitten 11a und 11b bewirkt dabei ein radiales nach außen Schwenken der Griffstückteile 5a,6a, so daß die Rastnasen 9 außer Eingriff mit der Nut 8 treten. Dadurch kann der Staubsaugerschlauch vom Gerätegehäuse 1 gelöst werden. Die schalenförmige Ausbildung der Griffstückteile 5,6 ergibt eine optimale Handhabbarkeit des Griffstücks, wobei der keilförmige Spaltabschnitt 11b den maximalen Schwenkbereich der Griffstückteile 5,6 begrenzt, nachdem dann die betreffenden Spaltkanten 11 c gegeneinanderstoßen. Außerdem dient nicht nur der Scharniersteg 10 als Gelenk, vielmehr stützen sich die Griffstückteil-Schalen beim Zusammendrücken der Handhabenteile 5b,6b im Bereich des Scharnierpunkts 13 aneinander ab, so daß ein sicheres Öffnen der Eingriffverbindung zwischen den Rastnasen 9 und der Nut 8 gewährleistet ist.

Der Scharniersteg 10 verläuft nicht einfach radial, sondern weist einen auf der Außenmantelfläche des Innenrohres 7 stehenden Stegabschnitt 18 auf, an den sich ein parallel zur Innenrohrachse 14 und zum Saugschlauch 4 hin gerichteter Stegabschnitt 15 anschließt. An diesen äußeren Stegabschnitt 15 ist der jeweilige Zangenschenkel 5,6 angesetzt; er verläuft zudem mit radialem Abstand parallel benachbart zu dem mit der Rastnase 9 versehenen Schenkelteil 5a. Die Biegeelastizität des Scharnierstegs 10 ist damit wesentlich verbessert. Zudem weist dieser Stegabschnitt 15 am Übergang zur Verbindungsstelle 12 einen schräg nach außen geneigten Rand 17 auf, der für einen ausreichenden radialen Abstand der Handhabenteile 5b, 6b vom Saugschlauch 4 sorgen. Dabei erstreckt sich der Spalt 11a auch in den Stegabschnitt 15 und kann sich zumindest teilweise im Stegabschnitt 18 fortsetzen. Hierdurch ergibt sich eine Entkopplung der beiden Griffstückteile 5,6. Damit außerdem das gesamte Griffstück mit den Rastnasen 9 hinterschneidungsfrei in axialer Richtung aus einem entsprechenden Kunststoffspritzwerkzeug entformt werden kann, ist der jeweilige Scharniersteg 10 im axial benachbarten Bereich der zugehörigen Rastnase 9 mit einer angepaßten Durchbrechung 16 versehen, durch die ein die Innenflanke der jeweiligen Rastnase ausbildender Werkzeugstempel beim Auseinanderziehen des Spritzwerkzeugs entformt werden kann.

Insgesamt ergibt sich somit eine Verbindung des Bodenstaubsaugers mit dem Saugschlauch über ein einteiliges Kunststoffspritzteil, das eine feste aber gut lösbare Verbindung mit dem Gerät sicherstellt, rundum drehbar beweglich ist und dabei eine feste, schwer lösbare Verbindung mit dem Saugschlauch ermöglicht. Es wird daher eine Teilereduzierung trotz integrierter Schlauchbefestigung am Schlauchanschluß ermöglicht. Dabei ist das Griffstück insgesamt ein unkompliziertes Teil mit optimaler Funktion und Handhabung. Zudem läßt sich die Kupplung zwischen dem Staubsaugerschlauch und dem Staubsaugergehäuse mit einer Hand bedienen. Wenn dabei die Eigenelastizität des Scharnierstegs für die dauerhafte Rückstellung in die statische Ausgangslage nicht sichergestellt ist, dann kann ein zusätzliches Federelement zwischen den Griffstückteilen 5,6 vorgesehen werden. Hierzu eignet sich insbesondere ein Federring, der insbesondere der Außenmantelfläche des Griffstücks im Bereich der Rastnasen zugeordnet ist und eine radial nach innen gerichtete Kraftkomponente erzeugt. Es kann jedoch auch zwischen die als Handhabe dienenden Schenkelteile 5b,6b eine Spreizfeder eingesetzt werden. Zur Sicherung solcher Federelemente dienen insbesondere angepaßte Ringnuten.

## Patentansprüche

1. Staubsaugerschlauch mit einem flexiblen Saugschlauch (4) mit einem daran an einem Ende festgesetzten Griffstück (5,6), dem eine schwenkbare Rastnase (9) zugeordnet ist, die für den lösbaren Eingriff mit einer Gegenraste (8) an einem Staubsaugergehäuse (1) ausgebildet und mit einer manuell betätigbaren Handhabe (5b,6b) versehen ist, dadurch gekennzeichnet, daß die Rastnase (9) einstückig mit einem Teil des Griffstücks (5,6) und dieser Griffstückteil (5 bzw. 6) schwenkbeweglich und einstückig mit dem übrigen Griffstück (5,6,7,10) sowie mit der Handhabe (5b,6b) verbunden ist.

2. Staubsaugerschlauch nach Anspruch 1, dadurch gekennzeichnet, daß das Griffstück (5,6) an einem Innenrohr (7), auf dessen einem Ende der Saugschlauch (4) festgesetzt ist, einen radial nach außen verlaufenden Scharniersteg (10) aufweist, an den ein als beweglicher Griffstückteil (5 bzw. 6) dienender Zangenschenkel angesetzt ist, der sich in axialer Richtung beidseitig vom Scharniersteg (10) weg erstreckt und an dem dem Saugschlauch (4) abgewandten Schenkelteil (5a,6a) die Rastnase (9) trägt, während der zum Saugschlauch (4) gerichtete Schenkelteil (6a,6b) als Handhabe mit radialem Abstand vom Innenrohr (7) bzw. dem Saugschlauch (4) angeordnet ist.

3. Staubsaugerschlauch nach Anspruch 1 oder 2, dadurch gekennzeichnet, daß zwei diametral angeordnete Zangenschenkel (5,6) am Innenrohr (7) angeordnet sind.

4. Staubsaugerschlauch nach Anspruch 1 oder einem der folgenden, dadurch gekennzeichnet, daß der Zangenschenkel (5,6) nach Art einer koaxial zum Innenrohr (7) angeordneten, weniger als den halben Umfang umschließenden Schale ausgebildet ist.

5. Staubsaugerschlauch nach Anspruch 1 oder einem der folgenden, dadurch gekennzeichnet, daß der Scharniersteg (10) einen auf der Außenmantelfläche des Innenrohres (7) stehenden Stegabschnitt (13) und einen daran anschließenden, parallel zur Innenrohrachse (14) und zum Saugschlauch (4) hin gerichteten Stegabschnitt (15) aufweist, an welchen der Zangenschenkel angesetzt ist und zu dem der mit der Rastnase (9) versehene Schenkelteil (5a) mit radialem Abstand parallel verläuft.

6. Staubsaugerschlauch nach Anspruch 1 oder einem der folgenden, dadurch gekennzeichnet, daß das Innenrohr (7) axial über den mit dem Rasthaken (9) versehenen Zangenschenkel (5a,6a) hinausragt.

7. Staubsaugerschlauch nach Anspruch 1, dadurch gekennzeichnet, daß der Scharniersteg (10) im Bereich eines Zangenschenkels und im axialem Bereich der Rastnase (9) wenigstens eine angepaßte Durchbrechung aufweist.

8. Staubsaugerschlauch nach Anspruch 1 oder einem der folgenden, dadurch gekennzeichnet, daß zwischen den Zangenschenkeln (5,6) in Achsrichtung Spalte (11) vorgesehen sind.

9. Staubsaugerschlauch nach Anspruch 8, dadurch gekennzeichnet, daß der Spalt (11b) zwischen den als Handhabe (5b,6b) ausgebildeten Schenkelteilen breiter als zwischen den die Rastnasen (9) tragenden Schenkelteilen (5a,6a) ist.

10. Staubsaugerschlauch nach Anspruch 1 oder einem der folgenden, dadurch gekennzeichnet, daß den Griffstückteilen (5,6) wenigstens ein Rückstellfederelement zugeordnet ist.

## Claims

1. Vacuum cleaner hose with a flexible suction hose (4) having a grip member (5, 6) fixed thereto at one end, with which grip member a pivotable locating lug (9) is associated, which is formed for detachable engagement with a counter-catch (3) on a vacuum cleaner housing (1) and which is provided with a manually actuatable handle (5b, 6b), characterised in that the locating lug (9) is integral with part of the grip member (5, 6) and this grip member portion (5 and 6 respectively) is connected with pivotal motion and integrally with the rest of the grip member (5, 6, 7, 10) and with the handle (5b, 6b).

2. Vacuum cleaner hose according to claim 1, characterised in that the grip member (5, 6) has on an inner tube (7), on whose one end the suction hose (4) is fixed, a radially outwardly extending hinge web (10), which a pincer shank acting as a moving grip member portion (5 and 6 respectively) abuts, the pincer shank extending axially on either side away from the hinge web (10) and carrying on the shank portion (5a, 6a) remote from the suction hose (4) the locating lug (9), whilst the shank part (6a, 6b) oriented towards the suction hose (4) is disposed as a handle with radial clearance from the inner tube (7) or the suction hose (4).

3. Vacuum cleaner hose according to claim 1 or 2, characterised in that two diametrically opposite pincer shanks (5, 6) are disposed on the inner tube (7).

4. Vacuum cleaner hose according to claim 1 or one of the subsequent claims, characterised in that the pincer shank (5, 6) is formed as a shell disposed coaxial to the inner tube (7) and enclosing less than half the circumference.

5. Vacuum cleaner hose according to claim 1 or one of the subsequent claims, characterised in that the hinge web (10) has a web section (13) standing on the outer surface of the inner tube (7) and a web section (15) which abuts the former, is oriented parallel to the inner tube axis (14) and to the suction hose (4), and which runs parallel to and with radial clearance from the shank part (5a) provided with the locating lug (9).

6. Vacuum cleaner hose according to claim 1 or one of the subsequent claims, characterised in that the inner tube (7) projects axially beyond the pincer shank (5a, 6a) provided with the locating hook (9).

7. Vacuum cleaner hose according to claim 1, characterised in that the hinge web (10) has in the region of a pincer shank and in the axial region of the locating lug (9) at least one adapted aperture.

8. Vacuum cleaner hose according to claim 1 or one of the subsequent claims, characterised in that between the pincer shanks (5, 6) gaps (11) are provided in the axial direction.

9. Vacuum cleaner hose according to claim 8, characterised in that the gap (11b) between the shank parts formed as a handle (5b, 6b) is wider than between the shank parts (5a, 6a) carrying the locating lugs (9).

10. Vacuum cleaner hose according to claim 1 or one of the subsequent claims, characterised in that at least one restoring spring element is allocated to the grip member portions (5, 6).

## Revendications

1. Tuyau d'aspirateur avec un tuyau d'aspiration flexible (4) avec une pièce de préhension (5, 6) fixée à une extrémité de celui-ci, à laquelle est associé un ergot d'enclenchement pivotant (9) qui est réalisé pour la mise en prise amovible avec un contre-ergot (8) à un boîtier d'aspirateur (1) et est pourvu d'une prise (5b, 6b) actionnable manuellement, caractérisé en ce que l'ergot d'enclenchement (9) est relié en une pièce à une partie de la pièce de préhension (5, 6) et cette partie de pièce de préhension (5, 6) est reliée de manière pivotante et en une pièce à la pièce de préhension restante (5, 6, 7, 10) ainsi qu'à la prise (5b, 6b).

2. Tuyau d'aspirateur selon la revendication 1, caractérisé en ce que la pièce de préhension (5, 6) présente sur un tuyau intérieur (7) sur l'extrémité duquel est fixé le tuyau d'aspiration (4), une barrette de charnière (10) s'étendant radialement vers l'extérieur sur laquelle est rapportée une branche de pince servant de partie de pièce de préhension mobile (5 respectivement 6) qui s'étend dans la direction axiale des deux côtés au loin de la barrette de charnière (10) et qui porte à la partie de branche (5a, 6a) éloignée du tuyau d'aspiration (4) l'ergot d'enclenchement (9) tandis que la partie de branche (6a, 6b) orientée vers le tuyau d'aspiration (4) est disposée comme prise à une distance radiale du tuyau intérieur (7) respectivement du tuyau d'aspiration.

3. Tuyau d'aspirateur selon la revendication 1 ou 2, caractérisé en ce que sont disposées au tuyau intérieur (7) deux branches de pince (5, 6) disposées diamétralement.

4. Tuyau d'aspirateur selon la revendication 1 ou l'une des suivantes, caractérisé en ce que la branche de pince (5, 6) est réalisée à la manière d'une coque disposée coaxialement relativement au tuyau intérieur (7), entourant une partie inférieure à la moitié du pourtour.

5. Tuyau d'aspirateur selon la revendication 1 ou l'une des suivantes, caractérisé en ce que la barrette de charnière (10) présente un tronçon de barrette (13) debout sur la face de l'enveloppe extérieure du tuyau intérieur (7) et un tronçon de barrette (15) faisant suite à celui-ci, orienté parallèlement vers l'axe du tuyau intérieur (14) et vers le tuyau d'aspiration (4), auquel est rapportée la branche de pince et relativement auquel la partie de branche (5a) pourvue de l'ergot d'enclenchement (9) s'étend parallèlement à une distance radiale.

6. Tuyau d'aspirateur selon la revendication 1 ou l'une des suivantes, caractérisé en ce que le tuyau intérieur (7) fait saillie axialement sur la branche de pince (5a, 6a) pourvue de l'ergot d'enclenchement (9).

7. Tuyau d'aspirateur selon la revendication 1, caractérisé en ce que la barrette de charnière (10) présente au voisinage d'une branche de pince et dans la zone axiale de l'ergot d'enclenchement (9) au moins un perçage adapté.

8. Tuyau d'aspirateur selon la revendication 1 ou l'une des suivantes, caractérisé en ce que sont prévues entre les branches de pince (5, 6) dans la direction axiale des fentes (11).

9. Tuyau d'aspirateur selon la revendication 8, caractérisé en ce que la fente (11b) entre les parties de branche réalisées comme prise (5b, 6b) est plus large qu'entre les parties de branche (5a, 6a) portant les ergots d'enclenchement (9).

10. Tuyau d'aspirateur selon la revendication 1 ou l'une des suivantes, caractérisé en ce qu'il est associé aux parties de pièce de préhension (5, 6) au moins un élément de ressort de rappel.
